# EUROPEAN PATENT SPECIFICATION

(11) **EP 1 131 617 B1**
(45) Date of publication and mention of the grant of the patent: **01.10.2008**
(21) Application number: 99970731.8
(22) Date of filing: 19.10.1999
(51) Int. Cl.: G01N 21/05, G01N 21/85, G01N 15/02

(54) **MEASURING OF FIBER PROPERTIES**
MESSUNG VON FASEREIGENSCHAFTEN
MESURES DE PROPRIETES DE FIBRES

(30) Priority: 19.10.1998 SE 9803557
(43) Date of publication of application: 12.09.2001
(73) Proprietor: Fibertracker AB, 184 84 Åkersberga (SE)
(72) Inventor: KARLSSON, Hakan, Ingvar, S-184 61 Akersberga (SE); FRANSSON, Per-Ivar, S-184 32 Akersberga (SE)
(74) Representative: Onn, Thorsten
(86) International application number: PCT/SE1999/001878
(87) International publication number: WO 2000/023786

(56) References cited:
- EP-A1- 0 302 009
- DE-A- 2 414 162
- US-A- 3 740 156
- US-A- 5 064 287
- US-A- 5 351 118
- DATABASE WPI Week 199107, Derwent Publications Ltd., London, GB; AN 1991-050312, XP002949827 & SU 1 573 401 A (YAKUSHEV V P) 23 June 1990

## Description

The present invention relates to a device that allows the measurement of fibre properties in a flowing suspension, which device includes a measuring cell in which there is a measuring field defined between two limiting surfaces and a means of adjusting the width of the measuring field, the limiting surfaces having two opposing, transparent sections that allow illumination through the flowing suspension passing through and measurement by optical means, and the measuring cell having an inlet opening intended for the whole of the suspension flow and an outlet opening intended for the whole of the suspension flow.

The basic principle for a measurement of the intended type is that the fibres are introduced into a measuring chamber. In the measuring chamber, the fibres are illuminated and observed by an optical system. The optical system has a limited depth of focus. This requires that the extension of the measuring chamber must be less than the depth of focus. This is to make it possible to obtain sharp images of the fibre and means that the dimensions are normally very small, which in turn leads to major problems in eliminating blockage of the measuring chamber.

One example of this basic principle is the so-called Kajaani meter (FS200), that today allows a standard method for analysing the length of fibres in the laboratory. In this known meter, fibres flow through a capillary with a diameter of 0.2-0.4 mm. The advantage of a capillary is that the fibre is oriented in two planes. Measurement of it is facilitated when the fibre is oriented in the direction of flow. The problem here is that the capillary blocks easily if larger particles also follow in the flow. Such a meter is therefore not suitable for use on-line in the processing industry when impurities can occur and at the same time as one has extreme demands on the availability of the measuring instrument.

In the measurement systems Optikappa and PQM, which relate to an on-line arrangement for measuring the quality of fibres, the fibres have to flow through a glass cuvette of sufficiently large dimensions so that the risk of it becoming blocked is very small. The dimensions across the area of flow are 10x10 mm. This has been used in a factory environment for some considerable time and works satisfactorily on-line with good availability. However, the problem with this solution is that it does not allow sufficiently good optical focus in the imaging.

US 5,311,290 describes a measuring device for measuring in a column-shaped section. Here, a flow of fibres surrounded by a flow of pure water is processed in the measurement section. This is claimed to reduce the risk of blockage due to bundles of fibres, fibre flocculation and/or so-called straggles. One therefore avoids the use of very narrow measuring columns.

Swedish application No. 870 44 85-5 describes a device for preparing a suspension for measuring in a column-shaped measuring section with high concentrations of fibre. The principle is built on there being a narrower column immediately in front of the measuring column where energy is supplied in the form of a rotating impeller that is arranged to disrupt flocculation and larger impurities. As the impurities are broken down, the risk of blockage is consequently reduced.

US 5351118 discloses an apparatus and a method for analyzing particles suspended in a liquid. The apparatus comprises a flow area in the shape of a channel in a cuvette comprising two limiting surfaces ("first and second body member") having a planar facial surface. The surfaces (body members) can be moved relative to one another, facilitating cleaning of the apparatus.

US 5064287 discloses a fluid sample flow cell characterized by a circumferentially uniform radial fluid flow. The fluid flows outwardly through a nozzle and into an annular distribution ring, and then circumferentially around the exit port to the fluid outlet. The purpose is to provide a uniformly distributed flow to minimize dead volumes.

US 3,740,156 shows how a sample is captured between two windows that are moveable across the direction of flow.

EP 0 302 009 shows two moveable windows in a channel.

Both latter named arrangements do not, however, work satisfactorily in a flow containing fibres when one wants to measure the particle size distribution of the fibres in a manner that is fully statistically correct. There is a large risk of fractionation caused by the gradient of the flow as only part of the passage is closed.

The present invention, defined in claim 1, takes into consideration many of the disadvantages of the designs named above and is characterised firstly in that the inlet opening extends through one of the limiting surfaces.

Advantageous embodiments of the new measurement device are evident from the claims 2-6.

The new design allows optical measurement of fibre properties with both high precision and good focus, whereby the problem of blockage of the measuring field is at the same time eliminated in a simple and practical manner. In addition, with one preferred embodiment, it is possible to obtain a measurement flow that is better than described in US 5,311,290. In the present case, the direction across the flow in the x/y plane can be considered as indefinite. The flow can also be considered as flow in a thin indefinite plane between two permanent limiting surfaces. Well-defined measuring conditions thus exist with little influence of disturbing edge effects.

There is little risk of blockage according to the invention as the fibres flow through a measuring field whose width can be altered. During measurement, the measuring field is given a width so that a good image of the particles being studied is obtained. The measurement is representative as the whole of the flow passes between the measuring field. Between measuring sequences, the measuring column can be widened so that it can be flushed clean, preferably with water.

This solution does not necessarily require any rotating parts in the actual measuring cell, which is, however, the case with the design according to Swedish application no. 870 44 85-5. A preferred embodiment of the invention will now be described in more detail below with reference to the enclosed drawings, whereby:
**Fig. 1** shows a plane view of the new measuring device connected in the correct configuration for on-line measurement in connection with a conventional process line from the side and partly in section;
**Fig. 2** shows a side section of the new measuring device and its key components;
**Fig. 3** shows a section along line A-A in Fig. 2 whereby the size of the sectional view is greatly reduced; and whereby
**Fig. 4** shows a possibility for rotation in one of the parts included in the device according to Fig. 2.

Identical parts that appear in the different figures have been assigned identical numerical designations.

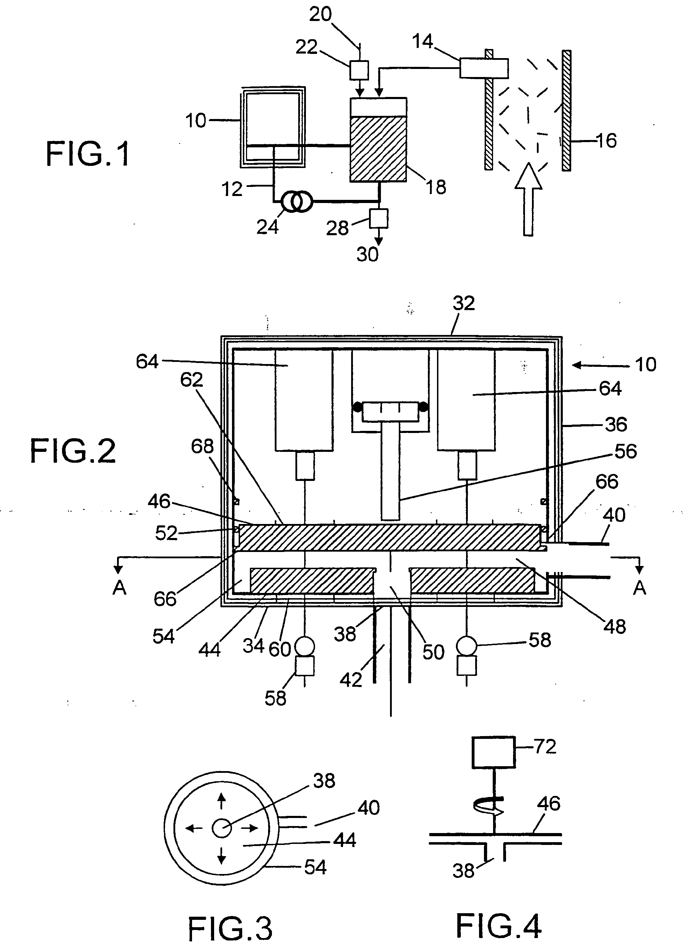

The measuring cell 10 shown in Fig. 1 includes a loop 12 in which the suspension flow intended for the measurement of fibre properties circulates. Samples are removed with a sampler 14 from a process line 16 with a direction of flow indicated by the arrow and are flushed over to a tank 18. In the present case, the sample is diluted in tank 18 with water from a line 20 via a valve 22 to obtain a suitable suspension. The suspension is pumped from tank 18 to measuring cell 10 by a pump 24. Afterwards, the suspension flow is returned from measuring cell 10 to tank 18. When measurement of all of the intended suspension flow has been completed, a valve 28 opens and the system is emptied via waste outlet 30.

The actual measuring cell 10 and its key parts for the invention are more evident in Fig. 2. Measuring cell 10 has the shape of a cylindrical measuring cell that is limited by a plane circular upper wall 32 and a plane circular lower wall 34. The cylindrical wall 36 of the measuring cell and both circular walls 32, 34 are all suitably manufactured in metal. There is a central inlet opening 38 for a suspension flow in the middle of lower wall 34 and an equivalent outlet opening 40 in cylindrical wall 36. In the current example, the axes for both openings 38, 40 form an angle of 90° to one another. A cylindrical inlet pipe 42 to direct and stabilise the incoming suspension flow is connected to inlet opening 38. Inlet pipe 42 has a length that is several times greater than its width. Inside measuring cell 10, there are two glass plates 44, 46 that are flat and parallel with one another. A measuring field 48 for the suspension flow is defined between both glass plates 44, 46. The suspension flow enters via inlet opening 38 in lower wall 34 and a central opening 50 in the lower glass plate 44 that is associated with inlet opening 38 and located at its centre.

As is evident from the drawing, the periphery of upper glass plate 46 is sealed against the inside of cylinder wall 36 of measuring cell 10. This makes us of standard technology using circular gaskets 52. Lower glass plate 44 does not, however, extend at its periphery all the way to the inner limiting surfaces of measuring cell 10 but instead leaves an intermediate ring-shaped space 54. This means that a centrally incoming suspension flow will pass radially outwards in measurement field between both glass plates 44, 46 whereby the pressure of the suspension flow is greatest at the actual inlet opening 38 and then diminishes towards ring-shaped space 54.

As is also evident from the drawing, upper glass plate 46 forms a cylindrical piston that can be raised and lowered inside measuring cell 10 via positioning equipment such as a pressurised air-driven piston rod 56 so that the width of the measuring field 48 can be changed according to wish. In this way, the desired width of the measuring field can be obtained and thus also a sufficient depth of focus in the measurement. In the embodiment shown, identical light sources 58 are placed in connection with the outside of the underside of lower wall 34 to pass light through the suspension flow in measurement field 48 via respective transparent windows 60, 62 in both glass plates 44, 46. Inside measuring cell 10, there are equivalent cameras 64 for registering the image. The number of light sources 58 and cameras 64 can naturally vary according to wish. Fig. 2 shows only two light sources 58 and thus two interacting cameras 64.

The measuring area comprises only a part of the total surface area of the respective glass plates 44, 46 so that the measurement will not be dominated by edge effects.

As upper glass plate 46 can be raised and lowered within an area that is limited by equivalent stop devices 66, 68 arranged on cylinder wall 36, it is easy to widen the measuring field 48 to flush it clean with water as needed before the measurements continue. In this way, measuring field 48 does not need to be back-flushed, which is the usual means of operation with conventional designs.

It has been shown that in small measurement fields 48 (e.g. 0.5 mm), a very effective disintegration takes place in the actual measurement field due to the shear flow that arises there. This is positive and important for the measurement of fibre-containing suspension flows where one wants to keep the suspended particles dispersed during measurement and it further emphasises the value of measuring in narrow, flat measurement fields. The system of recirculation improves the conditions even more.

There is, however, a risk that particles or conglomerates of particles that are too large become blocked before the measuring field 48. By choosing fibre concentrations suitable for the conditions (0.02 gram per litre, which is very low), and suitable flow rates (greater than 1 m/sec), the fibres can nevertheless normally pass through measuring field 48 and so that a blockage in the suspension flow only occurs as an exception. With the present invention, it thus has to be accepted that occasional measurements can be disturbed if occasional too large particles accompany the sample. This will not cause the measurement system to cease to function as it is self-cleaning. By running double samples and checking the deviation between the double samples, one can ensure that the measurements are correct. If too large a deviation is seen, the sample can be re-run.

Fig. 3 shows the lower glass plate 44 of the measuring field 48. The suspension flow enters through the inlet opening 38 and flows radially outwards from the centre of the lower glass plate 44 towards the periphery, as is marked by arrows. The entire suspension flow passes this way. The suspension flow has its full pressure at the inlet opening 38 and this diminishes radially outwards in the measuring field 48, after which the suspension is collected in the annular-shaped collection ring 54 following the drop in pressure across measuring field 48. The suspension flow finally passes through the outlet opening 40 and back to the tank 18 (Fig. 1).

Fig. 4 shows an example of how the moveable upper glass plate 46 can rotate with the aid of a motor 72. The suspension flow enters via inlet opening 38, passes measuring field 48 and finally flows out via outlet opening 40 (Fig. 2). In this way, increased shearing forces are obtained in the measuring field. This is possible due to the rotational symmetry of the design. The flow through in measuring field 48 is facilitated and the opportunity to influence the fibres mechanically is increased via the increased shearing forces in the suspension when the measuring cell is used to perform flexibility measurements according to SE 465 983.

Modifications of the arrangement described above with reference to the drawings are naturally possible within the scope of the following claims.

## Claims

1. Device for measuring fibre properties in a flowing suspension, which device includes a measuring cell (10) comprising two limiting surfaces defining a measuring field (48), the limiting surfaces having two opposing, transparent sections (60, 62) that allow illumination through the flowing suspension passing through and measurement by optical means, and the measuring cell (10) having an inlet opening (38) intended for the whole of the suspension flow and an outlet opening (40) intended for the whole of the suspension flow,
wherein the inlet opening (38) extends through one of the limiting surfaces;
the limiting surfaces are circular plates (44, 46); and
the device further comprises an inlet tube (42) for directing and stabilising the suspension flow, said tube being connected to the inlet opening (38) and having a length that is greater than its width **characterised in that** the device further comprises a means (56) of adjusting the width of the measuring field.

2. Device according to claim 1, **characterised in that** the periphery of the other limiting surface extends to reach an outer wall (36) of the measuring cell (10) and that an intermediate space occurs between the periphery of the said one limiting surface and the outer wall (36) to form a peripheral field (54).

3. Device according to any of claims 1-2, **characterised in that** the distance between the limiting surfaces is adjustable within the range of 0.5-5 mm.

4. Device according to any of claims 1-3, **characterised in that** the inlet opening (38) is positioned centrally with regard to the said one limiting surface to obtain a radial suspension flow in the measuring field (48) having circular limiting surfaces, with a pressure that diminishes in a radial direction.

5. Device according to claim 4, **characterised in** comprising a motor (72), where the other limiting surface is rotatable by the aid of said motor.

6. Device according to any of claims 2-5, **characterised in that** the area of the inlet tube (42) across the direction of flow is greater than the area of the measuring field (48) across the direction of flow immediately after the inlet opening (38).

## Patentansprüche

1. Vorrichtung zur Messung von Fasereigenschaften in einer fliessenden Suspension, welche Vorrichtung eine Messzelle (10) mit zwei Begrenzungsflächen umfasst, die ein Messfeld (48) definieren, wobei die Begrenzungsflächen zwei gegenüberliegende, transparente Abschnitte (60, 62) aufweisen, die eine Beleuchtung durch die durchfliessende Suspension und eine Messung durch optische Mittel gestatten, und die Messzelle (10) eine für den ganzen Suspensionsfluss vorgesehene Einlassöffnung (38) und eine für den ganzen Suspensionsfluss vorgesehene Auslassöffnung (40) aufweist, wobei
die Einlassöffnung (38) durch eine der Begrenzungsflächen hindurchgeht;
die Begrenzungsflächen runde Platten (44, 46) sind; und
die Vorrichtung weiter ein Einlassrohr (42) zum Richten und Stabilisieren des Suspensionsflusses aufweist, das mit der Einlassöffnung (38) verbunden ist und dessen Länge grösser ist als dessen Breite, **dadurch gekennzeichnet, dass** die Vorrichtung weiter ein Mittel (56) zum Einstellen der Breite des Messfelds aufweist.

2. Vorrichtung nach Anspruch 1, **dadurch gekennzeichnet, dass** sich der Umfang der anderen Begrenzungsfläche bis zu einer Aussenwand (36) der Messzelle (10) erstreckt, und dass zwischen dem Umfang der genannten einen Begrenzungsfläche und der Aussenwand (36) ein Zwischenraum besteht, der ein Umfangsfeld (54) bildet.

3. Vorrichtung nach einem der Ansprüche 1 bis 2, **dadurch gekennzeichnet, dass** der Abstand zwischen den Begrenzungsflächen im Bereich von 0,5 bis 5 mm einstellbar ist.

4. Vorrichtung nach einem der Ansprüche 1 bis 3, **dadurch gekennzeichnet, dass** die Einlassöffnung (38) bezüglich der genannten einen Begrenzungsfläche mittig angeordnet ist, um im Messfeld (48) mit runden Begrenzungsflächen einen radialen Suspensionsfluss zu erzielen mit einem Druck, der in einer Radialrichtung abnimmt.

5. Vorrichtung nach Anspruch 4, **dadurch gekennzeichnet, dass** sie einen Motor (72) aufweist, wobei die andere Begrenzungsfläche mit Hilfe des Motors drehbar ist.

6. Vorrichtung nach einem der Ansprüche 2 bis 5, **dadurch gekennzeichnet, dass** die Fläche des Einlassrohrs (42) quer zur Fliessrichtung grösser ist als die Fläche des Messfelds (48) quer zur Fliessrichtung unmittelbar nach der Einlassöffnung (38).

## Revendications

1. Dispositif de mesure de propriétés de fibres dans une suspension en écoulement, lequel dispositif comporte une cellule de mesure (10) comprenant deux surfaces de limitation définissant un champ de mesure (48), les surfaces de limitation ayant deux sections (60, 62) transparentes opposées qui permettent une illumination à travers la suspension en écoulement passant entre celles-ci et une mesure par des moyens optiques, et la cellule de mesure (10) ayant un orifice d'admission (38) prévu pour l'ensemble du flux de suspension et un orifice de sortie (40) prévu pour l'ensemble du flux de suspension, où
l'orifice d'admission (38) passe par l'une des surfaces de limitation;
les surfaces de limitation sont des plaques circulaires (44, 46); et
le dispositif comprend en plus un tube d'admission (42) pour diriger et stabiliser le flux de suspension, ledit tube étant relié à l'orifice d'admission (38) et ayant une longueur qui est plus grande que sa largeur, **caractérisé en ce que** le dispositif comprend en plus un moyen (56) de réglage de la largeur du champ de mesure.

2. Dispositif selon la revendication 1, **caractérisé en ce que** la périphérie de l'autre surface de limitation s'étend jusqu'à une paroi extérieure (36) de la cellule de mesure (10) et qu'un espace intermédiaire est formé entre la périphérie de ladite une surface de limitation et la paroi extérieure (36) afin de former un champ périphérique (54).

3. Dispositif selon l'une quelconque des revendications 1 à 2, **caractérisé en ce que** la distance entre les surfaces de limitation est réglable dans la plage de 0,5 à 5 mm.

4. Dispositif selon l'une quelconque des revendications 1 à 3, **caractérisé en ce que** l'orifice d'admission (38) est agencé en position centrale par rapport à ladite une surface de limitation, de manière à obtenir un flux de suspension radial dans le champ de mesure (48) ayant des surfaces de limitation circulaires, avec une pression qui diminue dans une direction radiale.

5. Dispositif selon la revendication 4, **caractérisé en ce qu'**il comprend un moteur (72), l'autre surface de limitation pouvant être mise en rotation à l'aide dudit moteur.

6. Dispositif selon l'une quelconque des revendications 2 à 5, **caractérisé en ce que** la superficie du tube d'admission (42) en sens transversal à la direction d'écoulement est plus grande que la superficie du champ de mesure (48) en sens transversal à la direction d'écoulement immédiatement après l'orifice d'admission (38).
